# EUROPÄISCHE PATENTSCHRIFT

(11) **EP 1 331 374 B1**
(45) Veröffentlichungstag und Bekanntmachung des Hinweises auf die Patenterteilung: **27.04.2005**
(21) Anmeldenummer: 02028580.5
(22) Anmeldetag: 20.12.2002
(51) Int. Cl.: F01N 11/00, F01N 3/08, F02D 41/02, F02D 41/14

(54) **Verfahren und Vorrichtung zum Diagnostizieren der Speichereigenschaften eines NOx-Speicherkatalysators**
Method and device to diagnose the storing properties of a NOx storage catalyst
Procédé et dispositif pour diagnostiquer les propriétés de stockage d'un catalyseur de stockage des oxydes d'azote

(30) Priorität: 24.01.2002 DE 10202522
(43) Veröffentlichungstag der Anmeldung: 30.07.2003
(73) Patentinhaber: Bayerische Motoren Werke Aktiengesellschaft, 80809 München (DE)
(72) Erfinder: Hasenclever, Hanns-Christian, Dr., 80809 München (DE); Keenan, Matthew, Dr., 81539 München (DE); Ramatschi, Stephan, 85604 Zorneding (DE); Preuss, Florian, 80809 München (DE); Müller, Peter, 81673 München (DE); Detterbeck, Stefan, 80807 München (DE)

(56) Entgegenhaltungen:
- WO-A-02/33235
- DE-A- 19 926 149
- DE-C- 19 951 544

## Beschreibung

Die vorliegende Erfindung betrifft Verfahren und Vorrichtungen zur abgasnormkonformen Diagnose des Alterungsverhaltens eines NOₓ-Speicherkatalysators.

In den letzten Jahren wurde eine zunehmende Anzahl von Technologien zur Verbrennung von Kraftstoffen entwickelt, um die Verbrennung von Kraftstoffen zu optimieren, unter anderem die Magerverbrennungstechnologie. Dabei wird Kraftstoff auf der mageren Seite eines stöchiometrischen Luft-Kraftstoff-Verhältnisses verbrannt, wodurch sich die Kraftstoffausbeute im Teillastbetrieb verbessert.

Bei der Verbrennung eines solchen mageren Gemisches erzeugt der Motor im Abgas große Mengen an Stickoxiden (NOₓ). Diese NOₓ-Emissionen müssen aus Umweltschutzgründen möglichst auf Null reduziert werden.

Zur Abgasnachbehandlung von direkt einspritzenden Ottomotoren werden NOₓ-Speicherkatalysatoren eingesetzt.

Ein NOₓ-Speicherkatalysator arbeitet nicht kontinuierlich zum Abgasvolumen hin, sondern speichert die abgegebenen NOₓ-Emissionen ein. Der Katalysator ist also nach einem bestimmten absorbierten NOₓ-Volumen gesättigt. Die Zeitdauer bis zum Sättigungszustand ist abhängig von der Betriebsweise des Motors und dauert typischerweise 30 bis 120 Sekunden.

Um die Reinigungsfähigkeit des Speicherkatalysators wieder herzustellen schließt sich an die Speicherphase eine Regenerationsphase an, in welcher der Motor gezielt kurzzeitig, nämlich ca. 2 bis 4 Sekunden lang, im unterstöchiometrischen, einem sogenannten "fetten" Luft-Kraftstoff-Verhältnis betrieben wird. Dabei werden die NOₓ-Emissionen durch erhöhte CO- und HC-Emissionen reduziert.

Sobald alle Stickoxide im Speicherkatalysator reduziert sind, verläßt den Katalysator unreagiertes HC und CO. Dieses unterstöchiometrische Luft-Kraftstoff-Verhältnis wird von einem stromabwärts vom Speicherkatalysator positionierten Sensor gemessen. Diese Technologie offenbart z.B. die WO-A-94-17291. Dies ist der Beginn einer neuen Speicherphase, in der der Motor im überstöchiometrischen, also mageren Luft-Kraftstoff-Verhältnis betrieben wird.

Es besteht nun das Problem, daß ein NOₓ-Speicherkatalysator im Betrieb altert und sich seine Absorptionseigenschaften gegenüber dem Neuzustand verschlechtern. Von den Gesetzgebern in Europa und in den USA ist deshalb vorgeschrieben, daß solche NOₓ-Speicherkatalysatoren einer sogenannten On-Board Diagnose an Bord von Kraftfahrzeugen zu unterziehen sind, um die aktuelle Restspeicherkapazität eines im Betrieb gealterten Speicherkatalysators ermitteln zu können, und feststellen zu können, ob ein Speicherkatalysator noch ein vorbestimmtes Minimum an Absorptionsfähigkeit erreicht oder nicht.

In der DE 199 26 149 A1 wird bereits ein Verfahren zur Erfassung einer Schädigung von einem in einem Abgaskanal einer Brennkraftmaschine angeordneten NOₓ-Speicherkatalysator beschrieben, bei dem der Ist-Signalverlauf einer Gaskomponente mit dem Sollverlauf der Gaskomponente verglichen wird.

Aus der DE 196 20 417 A1 sind Vorrichtungen und Verfahren zum Diagnostizieren des Alterungszustands eines Katalysators bekannt, wobei der Abgasstrom in einem Verbrennungsmotor gesteuert wird und wobei Sensoren zum Erfassen des Betriebszustands des Verbrennungsmotors verwendet werden Die hierin beschriebenen Vorrichtungen und Verfahren gehen jedoch nicht speziell auf die Arbeitsweise eines Speicherkatalysators für Stickoxide, eines sogenannten NOₓ-Speicherkatalysators, ein, sondern zielen vielmehr auf die Erzielung eines Zielwerts für das Luft-/Kraftstoff-Verhältnis einer in den Verbrennungsmotor einzusaugenden Mischung ab.

Aus der nicht offengelegten deutschen Patentanmeldung PA 10051012.4 sind insbesondere Verfahren und Vorrichtungen zum abgasnormkonformen Diagnostizieren der Speichereigenschaften eines NOₓ-Speicherkatalysators nach den Oberbegriffen der unabhängigen Ansprüche 1 und 7 bekannt. Dabei ist ein NOₓ-Sensor im Abgasweg eines Verbrennungsmotors angeordnet, von welchem während einer Speicherphase NOₓ aus dem Abgas des Verbrennungsmotors gespeichert wird und während einer Regenerationsphase eine Katalyse des aktuelle Ist-Speicherdauer eines bereits gealterten NOₓ-Speicherkatalysators mit einer Referenz-Speicherdauer verglichen. Die Referenz-Speicherdauer ist dabei die abgasnormkonforme Speicherdauer, die in einem Vorversuch für einen noch nicht gealterten Katalysator ermittelt worden ist, der mit den aktuell ermittelten Motorbetriebsparametern betrieben worden ist. Die im Vorversuch für verschiedene Einstellwerte von Motorbetriebsparametern ermittelten Referenz-Speicherdauern sind in einem Betriebskennlinienfeld abgespeichert. Weicht die aktuell gemessene Ist-Speicherdauer zu stark von der im Vorversuch ermittelten abgasnormkonformen Referenz-Speicherdauer ab, so ist dies ein Zeichen dafür, daß der NOₓ-Speicherkatalysator zu sehr gealtert ist und nicht mehr ordnungsgemäß funktioniert, so daß er gegen einen neuen NOₓ-Speicherkatalysator auszutauschen ist.

In der Praxis ergeben sich bei der Ermittlung der exakten Ist-Speicherdauer eines NOₓ-Speicherkatalysators Probleme. Dies ist in der bereits erwähnten nicht offengelegten deutschen Patentanmeldung PA 10051012.4 ausführlich erläutert, deren Offenbarung hiermit ausdrücklich durch Inbezugnahme in die Offenbarung der vorliegenden Anmeldung mit eingeschlossen wird. Insbesondere zeigt sich bei in der Praxis verwendeten NOₓ-Sensoren häufig das Problem, daß diese Sensoren niedrige NOₓ-Konzentrationen erst ab einer bestimmten Ansprechschwelle zuverlässig von NH₃-Konzentrationen unterscheiden können. Deshalb muß man sich in Praxis bei der Bestimmung von tatsächlichen Ist-Speicherdauern oft mit auf Modellbildungen beruhenden Näherungslösungen zufrieden geben.

Aufgabe der vorliegenden Erfindung ist es, alternative Vorgehensweisen zur möglichst exakten Bestimmung der Ist-Speicherdauer eines NOₓ-Speicherkatalysators bereitzustellen. Dabei ist es insbesondere eine Aufgabe der vorliegenden Erfindung, Maßnahmen bereit zu stellen, mittels denen die abgasnormkonforme Diagnose des Alterungszustands eines NOₓ-Speicherkatalysators mit wenig Aufwand in einem Kraftfahrzeug applizierbar ist und auf Ressourcen von bereits in einem Kraftfahrzeug für andere Zwecke vorgesehenen Sensoren zurückgegriffen werden kann.

Diese Aufgaben werden erfindungsgemäß durch ein Verfahren mit den Merkmalen des unabhängigen Anspruchs 1 und eine Vorrichtung mit den Merkmalen des unabhängigen Anspruchs 7 gelöst.

Die abhängigen Ansprüche betreffen vorteilhafte Ausführungsformen der vorliegenden Erfindung.

Der vorliegenden Erfindung liegt die Erkenntnis zugrunde, daß das Speicherverhalten eines NOₓ-Speicherkatalysators, insbesondere also auch seine tatsächliche Ist-Speicherdauer durch eine Reihe von Motorbetriebsparametern eindeutig determiniert ist. Hat man in einem Vorversuch den funktionalen Zusammenhang zwischen solchen Motorbetriebsparametern und der tatsächlichen Ist-Speicherdauer eines bestimmten Typs eines NOₓ-Speicherkatalysators mit hinlänglicher Genauigkeit ermittelt, so kann man im späteren Betrieb des NOₓ-Speicherkatalysators dessen aktuelle Ist-Speicherdauer durch Messung der Motorbetriebsparameter und Auswertung der dabei ermittelten Meßwerte bestimmen. Dabei überwacht man in der Praxis der On-Board Diagnose des Speicherungsverhaltens eines in einem Kraftfahrzeug eingesetzten NOₓ-Speicherkatalysators vorteilhafterweise solche Motorbetriebsparameter, für die schon aus anderen Gründen Sensoren in der Überwachungssensorik eines Kraftfahrzeugs vorgesehen sind.

Mit dem erfindungsgemäßen Verfahren werden also die von einer Überwachungssensorik in einem Kraftfahrzeug sowieso schon ermittelten Meßdaten über bestimmte Motorbetriebsparameter aufgrund empirisch vorab bestimmter Zusammenhänge so ausgewertet, daß man Werte für die aktuelle Ist-Speicherdauer eines NOₓ-Speicherkatalysators erhält. Diese Ist-Speicherdauer wird dann mit einer in Vorversuchen ermittelten abgasnormkonformen Referenzspeicherdauer eines nicht gealterten NOₓ-Speicherkatalysators verglichen, um entscheiden zu können, ob der im Kraftfahrzeug tatsächlich eingesetzte NOₓ-Speicherkatalysator innerhalb tolerierbarer Grenzen noch abgasnormkonform arbeitet, oder ober gegen einen neuen NOₓ-Speicherkatalysator auszutauschen ist.

Die Vorteile und Merkmale der vorliegenden Erfindung ergeben sich auch aus den nachfolgenden Ausführungsbeispielen in Verbindung mit den Zeichnungen.

### Es zeigen:

Fig. 1 eine schematische Darstellung der Anordnung eines Motors mit einem im Abgasstrom des Motors angeordneten NOₓ-Speicherkatalysator und einer Diagnosevorrichtung zur Überprüfung des Alterungszustands des NOₓ-Speicherkatalysators.
Fig. 2 eine schematische Darstellung der wechselseitigen Zusammenhänge zwischen verschiedenen Parametern, die die Arbeitsweise des in Fig. 1 gezeigten NOₓ-Speicherkatalysators determinieren.
Fig. 3 eine schematische Darstellung des funktionalen Zusammenhangs zwischen der Ist-Speicherdauer des in Fig. 1 gezeigten NOₓ-Speicherkatalysators und ausgewählter Motorbetriebsparameter.

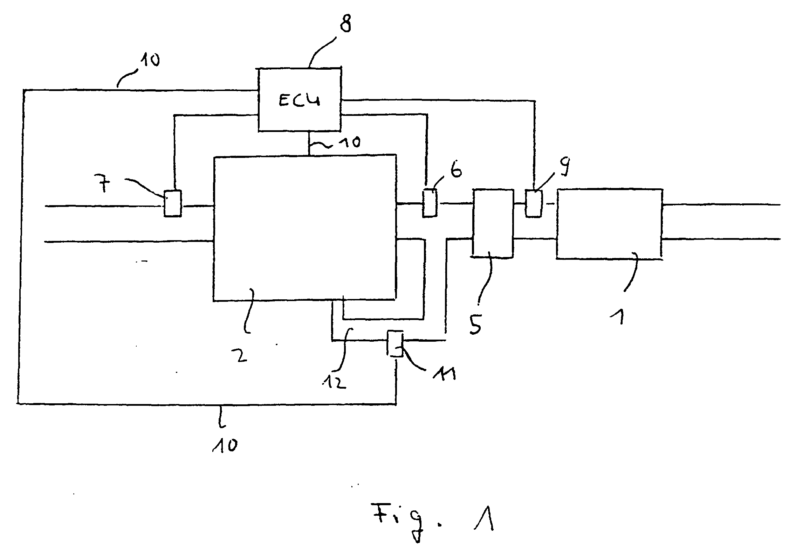

Fig. 1 zeigt schematisch die beispielhafte Anordnung eines Verbrennungsmotors 2 mit einem im Abgasstrom des Motors 2 angeordneten NOₓ-Speicherkatalysator 1 und einer Diagnosevorrichtung zur Überprüfung des Alterungszustands des NOₓ-Speicherkatalysators 1.

Im Abgasweg vor dem Speicherkatalysator 1 sind ein Vorkatalysator 5, von dem vorab HC und CO oxydiert und damit abgebaut werden, und eine Lambda-Sonde 6 angeordnet, über welche zur Steuerung des Verbrennungsmotors 2, insbesondere zur Einstellung und Regelung des Kraftstoff-Luftverhältnisses die Abgaszusammensetzung im ungereinigten Abgas unmittelbar hinter dem Verbrennungsmotor 2 ermittelt und an eine zugehörige Rechner- und Steuerungseinheit 8 geführt wird.

Die Diagnosevorrichtung hat ferner einen vor dem Verbrennungsmotor angeordneten Luftmassensensor 7 zur Erfassung der dem Verbrennungsmotor zugeführten Luftmasse. Alternativ oder insbesondere zusätzlich zu dem Luftmassensensor 7 kann die Diagnose-Vorrichtung einen Kraftstoffmassensensor aufweisen.

Ein Sensor 9 liefert der Rechner- und Steuerungseinheit 8 aktuelle Meßdaten über die Temperatur im Abgasweg vor dem NOₓ-Speicherkatalysator, welche wiederum die Temperatur im NOₓ-Speicherkatalysator determiniert.

Ein Sensor 11 liefert der Rechner- und Steuerungseinheit 8 aktuelle Meßdaten über die Abgasrückführrate AGR, mit welcher Abgase zur Nachverbrennung in den Verbrennungsmotor zurück geführt werden.

Alle genannten Sensoren sind über zugehörige elektrische Verbindungsleitungen 10 mit der Rechner- und Steuerungseinheit 8 verbunden.

Der Zündzeitpunkt des Verbrennungsmotors wird in der Regel fest eingestellt und kann als feste Größe in der Rechner- und Steuerungseinheit 8 abgespeichert sein.

Die Rechner- und Steuerungseinheit 8 umfaßt weiterhin Speichermittel, in denen ein funktionaler Zusammenhang zwischen Motorbetriebsparametern und der durch sie determinierten tatsächlichen Ist-Speicherdauer eines bestimmten Typs eines NOₓ-Speicherkatalysators abgespeichert ist.

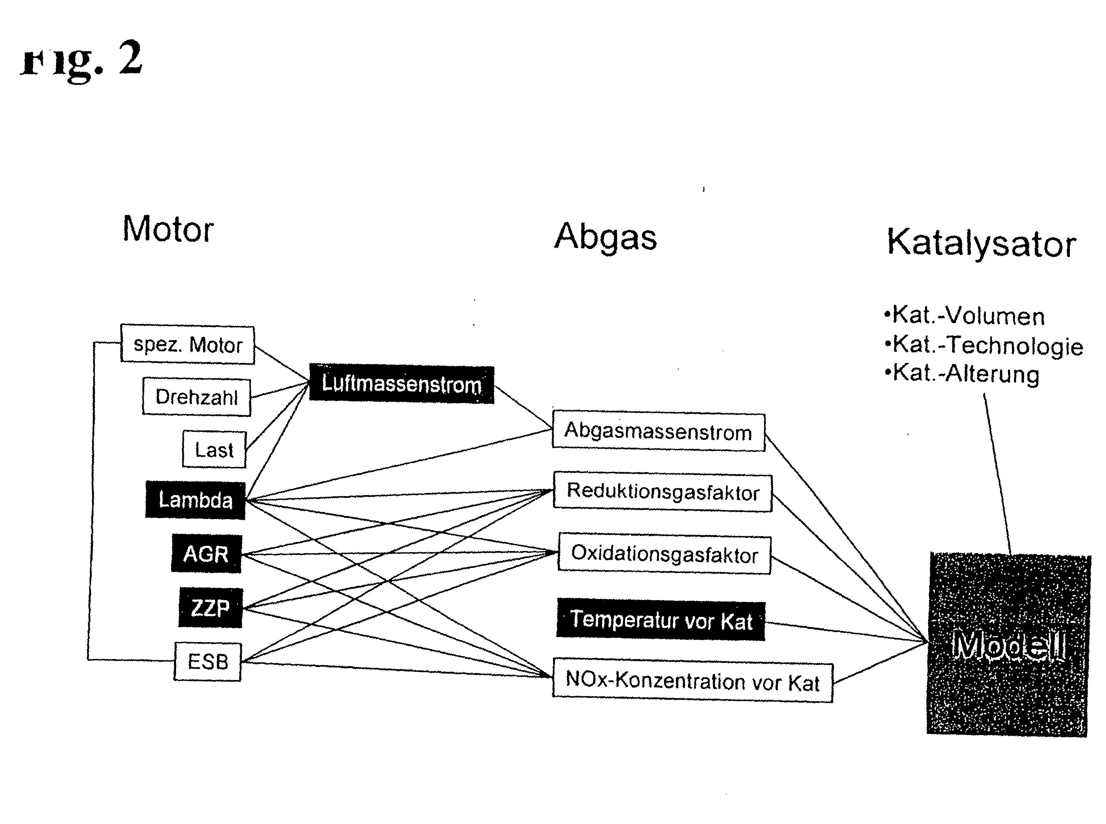

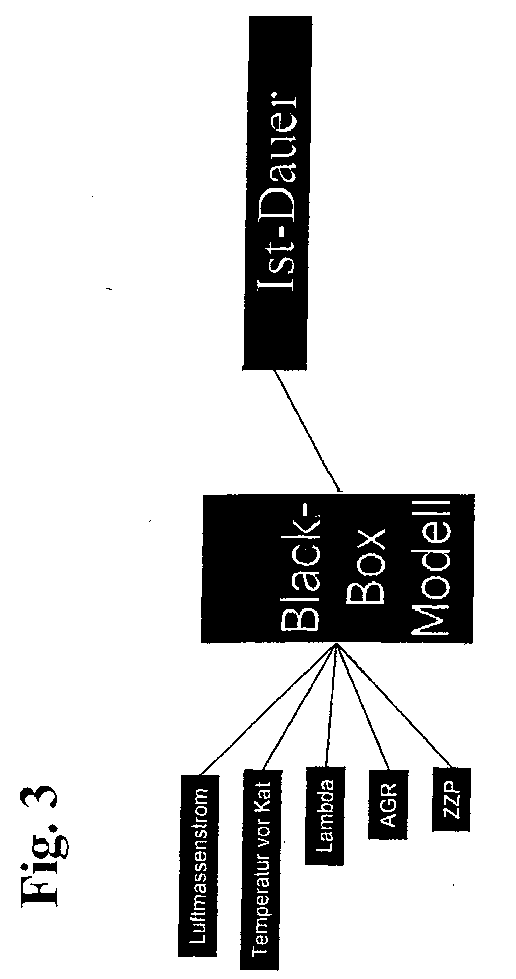

Der für das Zusammenwirken eines bestimmten Typs von NOₓ-Speicherkatalysator 2 mit einem bestimmten Typ von Verbrennungsmotor charakteristische funktionale Zusammenhang zwischen Ist-Speicherdauer des NOₓ-Speicherkatalysators 2 und Motorbetriebsparametern wird auf Basis der in Verbindung mit Fig. 2 und 3 schematisch dargestellten Modellbildung in einem Vorversuch ermittelt.

Fig. 2 zeigt schematisch empirisch bekannte wechselseitige Abhängigkeiten zwischen der Arbeitsweise eines NOₓ-Speicherkatalysators 2 und abgasspezifischer bzw. motorspezifischer Kenngrößen.

Dabei ist der aktuelle Betriebszustand eines Verbrennungsmotors gekennzeichnet durch den speziellen Motortyp, seine aktuelle Drehzahl, seine aktuelle Last (Drehmoment), seinen zuströmungsseitigen Lambda-Faktor (Zusammensetzung des Luft-Kraftstoffgemisches), seine Abgasrückführrate AGR, seinen in der Regel fest eingestellten Zündzeitpunkt ZZP und den Zeitpunkt des Einspritzbeginns ESB.

Der spezielle Motortyp, seine aktuelle Drehzahl, seine aktuelle Last und sein aktueller zuströmungsseitiger Lambda-Faktor legen den Luftmassenstrom des Verbrennungsmotors fest.

Der Luftmassenstrom, der Lambda-Faktor, die Abgasrückführrate, der Zündzeitpunkt und der Einspritzzeitpunkt determinieren ihrerseits wiederum die Beschaffenheit des Abgases, welche durch den Abgasmassenstrom, den Reduktionsgasfaktor, den Oxidationsgasfaktor, die Temperatur vor dem Katalysator und der NOₓ-Konzentration vor dem Katalysator charakterisiert werden kann.

Um Art und Menge des einem Katalysator zuströmenden Abgases vollständig und genau charakterisieren zu können, wäre also an sich je ein spezieller Sensor für die Temperatur vor dem Katalysator, den Abgasmassenstrom, den Reduktionsgasfaktor, den Oxidationsgasfaktor und die NOₓ-Konzentration vor dem NOₓ-Speicherkatalysator 1 notwendig.

Vorteilhafterweise wird in der Praxis jedoch anstelle von Sensoren für die vier letztgenannten Größen auf andere Sensoren zurückgegriffen, die bereits üblicherweise in Kraftfahrzeugen für andere Zwecke vorgesehen sind. Dies sind der Luftmassenstromsensor 7 vor dem Motor, der Abgasrückführsensor 11 und die Lambda-Sonde 6.

Der Zündzeitpunkt wird für den Verbrennungsmotor 2 fest eingestellt.

In Fig. 2 sind die fünf Größen, die letztlich zur Charakterisierung des Speicherverhaltens des NOₓ-Speicherkatalysators verwendet werden, durch dunkel hinterlegte Kästchen veranschaulicht.

Durch statistische Versuchsplanung werden nun in einem Vorversuch eine Vielzahl von Kombinationen dieser fünf Eingangsgrößen durchgespielt und parallel dazu die tatsächlichen Ist-Speicherdauern eines NOₓ-Speicherkatalysators exakt vermessen.

Aus dem bei diesen Vorversuchen ermittelten Zahlenmaterial lassen sich dann mittels bekannter numerischer Verfahren funktionale Zusammenhänge zwischen den in Form einer 5 x 5 Matrix darstellbaren fünf Eingangsgrößen und der tatsächlichen Ist-Speicherdauer ermitteln.

### Mit anderen Worten:

Durch Variation der Elemente einer 5 x 5 Matrix, in der die Eingangsgrößen unabhängig voneinander variiert werden und parallel dazu stattfindender Messung der tatsächlichen Ist-Speicherdauer eines NOₓ-Speicherkatalysators ist es möglich, einen funktionalen Zusammenhang zwischen den fünf Eingangsgrößen und der Ist-Speicherdauer zu finden (z.B. in Form von Zuordnungstabellen oder aber auch in analytischer Form, wie z.B. in Form eines Polynom fünften Grades). Dieser funktionale Zusammenhang ermöglicht eine für praktische Zwecke hinlänglich genaue Berechnung einer Ist-Speicherdauer in Abhängigkeit von den fünf Eingangsgrößen.

Die Korrelationen und Gesetzmäßigkeiten zwischen den fünf Eingangsgrößen und der Ist-Speicherdauer werden bevorzugterweiser mit Hilfe neuronaler Netze ermittelt.

Fig. 3 zeigt eine schematische Darstellung eines Modellaufbaus für einen bestimmten Motor und bestimmten Katalysator.

Hierbei werden der Luftmassenstrom zum Motor, die Temperatur vor dem Katalysator, das Signal der Lambdasonde hinter dem Motor, die Abgasrückführrate und der Zündzeitpunkt für einen gegebenen Motor und einen gegebenen Katalysator in einem Vorversuch systematisch variiert. Sodann wird die Ist-Speicherdauer in Abhängigkeit von den fünf Eingabeparametem ermittelt und mittels numerischer Black-Box Methoden ein funktionaler Zusammenhang ermittelt.

Dieser Zusammenhang wird in eine bereits an Bord eines Kraftfahrzeugs vorhandene Motorsteuerung, also z.B. die in Fig. 1 gezeigte Rechen- und Steuereinheit 8 eingespeist.

Im normalen Fahrbetrieb wird nun die tatsächlich erreichte Magerdauer anhand der genannten fünf Parameter auf Basis des im Vorversuch ermittelten Zusammenhangs ermittelt.

Weiterhin ist in der Rechen- und Speichereinheit eine betriebsparameterspezifische Referenz-Speicherdauer für einen nicht gealterten NOₓ-Speicherkatalysator hinterlegt.

Weicht die im laufenden Betrieb ermittelte Ist-Speicherdauer von der Referenz-Speicherdauer mehr als innerhalb vorgegebener abgasnormkonformer Toleranzgrenzen ab, so ist dies ein Zeichen dafür, daß der NOₓ-Speicherkatalysator zu sehr gealtert ist und deshalb gegen einen neuen NOₓ-Speicherkatalysator auszutauschen ist.

Die Vorteile des erfindungsgemäßen Verfahrens bestehen darin, daß eine sehr genaue und variable Vorgabe der NOₓ-Emissions des Motors für jeden Betriebspunkt ermöglicht wird.

Das erfindungsgemäße Verfahren ist direkt im Fahrzeug und mit wenig Aufwand applizierbar.

Das erfindungsgemäße Verfahren ist geeignet für eine Autoapplikation, bei dem jedes Fahrzeug den Neuzustand als Lernphase benutzt und sich anhand der im Neuzustand selbstgelernten Zusammenhänge während der gesamten Fahrzeuglebensdauer selbst diagnostizieren kann. Dadurch werden der Applikationsaufwand und die Entwicklungskosten erheblich reduziert.

### Bezugszeichenliste

- 1: NOₓ-Speicherkatalysators
- 2: Verbrennungsmotor
- 5: Vorkatalysator
- 6: Lambda-Sonde
- 7: Luftmassensensor (vor dem Verbrennungsmotor)
- 8: Rechner- und Steuereinheit
- 9: Temperatursensor
- 10: Verbindungsleitungen
- 11: Abgasrückführsensor
- 12: Abgasrückführleitung

## Patentansprüche

1. Verfahren zum Diagnostizieren der Speichereigenschaften eines NOₓ-Speicherkatalysators (1), welcher im Abgasweg eines Verbrennungsmotors (2) angeordnet ist und von welchem während einer Speicherphase NOₓ aus dem Abgas des Verbrennungsmotors (2) gespeichert wird und während einer Regenerationsphase eine Katalyse des während der Speicherphase gespeicherten NOₓ durchgeführt wird, wobei während der Speicherphase eine Ist-Speicherdauer ermittelt wird, wenigstens ein während der Ist-Speicherdauer vorliegender Motorbetriebszustand erfaßt wird, eine Referenz-Speicherdauer in Abhängigkeit von dem erfaßten Motorbetriebszustand ermittelt wird und die Ist-Speicherdauer mit der Referenz-Speicherdauer verglichen wird;
wobei in einem Vorversuch der funktionale Zusammenhang zwischen Motorbetriebsparametem und der durch sie determinierten tatsächlichen Ist-Speicherdauer eines bestimmten Typs eines NOₓ-Speicherkatalysators (1) ermittelt wird;
im späteren Betrieb des NOₓ-Speicherkatalysators (1) dessen aktuelle Ist-Speicherdauer durch Messung der aktuellen Motorbetriebsparameter unter Zugrundelegung des vorab empirisch ermittelten funktionalen Zusammenhangs bestimmt wird;
und man die so bestimmte Ist-Speicherdauer mit einer in Vorversuchen ermittelten abgasnormkonformen Referenz-Speicherdauer eines nicht gealterten NOₓ-Speicherkatalysators (1) vergleicht, um entscheiden zu können, ob der im Kraftfahrzeug tatsächlich eingesetzte NOₓ-Speicherkatalysator (1) innerhalb tolerierbarer Grenzen noch abgasnormkonform arbeitet, oder ob er gegen einen neuen NOₓ-Speicherkatalysator auszutauschen ist, **dadurch gekennzeichnet, daß** folgende fünf Motorbetriebsparameter als die die Ist-Speicherdauer determinierenden Motorbetriebsparameter zugrundegelegt werden:
- Luftmassenstrom zum Verbrennungsmotor (2);
- Temperatur im Abgasweg vor dem NOₓ-Speicherkatalysator (1);
- Lambda-Faktor (Verhältnis des Luftmassenstroms zum Kraftstoffmassenstrom auf dem Weg hin zum Verbrennungsmotor);
- Abgasrückführrate (AGR) zurück zum Verbrennungsmotor (2);
- Zündzeitpunkt (ZZP) des Verbrennungsmotors (2).

2. Verfahren nach Anspruch 1, **dadurch gekennzeichnet, daß** der funktionale Zusammenhang zwischen Ist-Speicherdauer und den Motorbetriebsparametem mittels auf neuronalen Netzwerken beruhenden Methoden numerisch ermittelt worden ist.

3. Verfahren nach einem der vorstehenden Ansprüche, **dadurch gekennzeichnet, daß** die Referenz-Speicherdauer unter Verwendung eines in einem Vorversuch ermittelten Betriebskennlinienfelds auf Basis mindestens eines aktuell gemessenen Betriebsparameters ermittelt wird.

4. Verfahren nach einem der vorstehenden Ansprüche, **dadurch gekennzeichnet, daß** der funktionale Zusammenhang zwischen Ist-Speicherdauer und den Betriebsparametem in Form von Kennlinienfeldern festgelegt wird.

5. Verfahren nach einem der vorstehenden Ansprüche, **dadurch gekennzeichnet, daß** der funktionale Zusammenhang zwischen Ist-Speicherdauer und den Betriebsparametem in Form einer analytischen Funktionsdarstellung festgelegt wird.

6. Vorrichtung zum Diagnostizieren der Speichereigenschaften eines NOₓ-Speicherkatalysators (1), welcher im Abgasweg eines Verbrennungsmotors (2) angeordnet ist und von welchem während einer Speicherphase NOₓ aus dem Abgas des Verbrennungsmotors (2) gespeichert wird und während einer Regenerationsphase eine Katalyse des während der Speicherphase gespeicherten NOₓ durchgeführt wird,
**dadurch gekennzeichnet, daß** die Vorrichtung umfaßt:
Sensoren zum Ermitteln von aktuellen Motorbetriebsparametern;
Speichermittel, in denen ein in einem Vorversuch ermittelter empirischer Zusammenhang zwischen den Motorbetriebsparametern sowie der Ist-Speicherdauer des NOₓ-Speicherkatalysators (1) abgespeichert ist, sowie ein in einem Vorversuch ermittelter empirischer Zusammenhang zwischen den Motorbetriebsparametern und einer Referenz-Speicherdauer eines nicht gealterten NOₓ-Speicherkatalysators (1);
Motorbetriebsparametern und einer Referenz-Speicherdauer eines nicht gealterten NOₓ-Speicherkatalysators (1);
Vergleichsmittel zum Vergleichen der Ist-Speicherdauer mit der Referenz-Speicherdauer,
wobei der Zusammenhang zwischen der Ist-Speicherdauer und folgenden Motorbetriebsparametem abgespeichert ist:
- Luftmassenstrom hin zum Verbrennungsmotor (2);
- Temperatur im Abgasweg vor dem NOₓ-Speicherkatalysator (1);
- Lambda-Faktor (Verhältnis des Luftmassenstroms zum Kraftstoffmassenstrom auf dem Weg hin zum Verbrennungsmotor);
- Abgasrückführrate (AGR) zurück zum Verbrennungsmotor (1);
- Zündzeitpunkt (ZZP) des Verbrennungsmotors (2).

7. Vorrichtung nach Anspruch 6, **dadurch gekennzeichnet, daß** der funktionale Zusammenhang zwischen den Motorbetriebsparametern und der Ist-Speicherdauer in Form einer Zuordnungstabelle abgespeichert ist.

8. Vorrichtung nach Anspruch 6, **dadurch gekennzeichnet, daß** der funktionale Zusammenhang zwischen den Motorbetriebsparametem und der Ist-Speicherdauer in Form eines analytisch darstellbaren Funktionszusammenhangs abgespeichert ist.

9. Kraftfahrzeug, in weiches eine Vorrichtung nach einem der Ansprüche 6 bis 8 eingebaut ist.

## Claims

1. A method of diagnosing the storage properties of a NOₓ storage catalytic converter (1) disposed in the exhaust-gas path of an internal combustion engine (2) and in which NOₓ from the exhaust gas of the engine (2) is stored during a storage phase and the NOₓ stored during the storage phase is catalysed during a regeneration phase, wherein during the storage phase an actual storage time is determined, at least one engine operating state during the actual storage time is detected, a reference storage time is determined in dependence on the detected engine operating state, and the actual storage time is compared with the reference storage time;
wherein the functional relation between engine operating parameters and the actual storage time determined by them for a specific type of an NOₓ storage catalytic converter (1) is determined in a preliminary test;
during subsequent operation of the NOₓ storage catalytic converter (1) its actual storage time is determined by measuring the actual engine operating parameters on the basis of the previously empirically determined functional relation, and
the thus-determined actual storage time is compared with a reference storage time of a non-aged NOₓ storage catalytic converter (1) determined in preliminary tests in conformity with the emission standards, in order to decide whether the NOₓ storage catalytic converter (1) actually used in the vehicle still operates in accordance with the emission standards within tolerable limits, or whether it must be replaced by a new NOₓ storage catalytic converter,
**characterised in that** the following five engine operating parameters are used as a basis for determining the actual storage time:
- the air mass flow to the engine (2);
- the temperature in the exhaust-gas path in front of the NOₓ storage catalytic converter (1);
- the lambda factor (ratio of the air mass flow to the fuel mass flow on the way to the engine);
- the exhaust return rate (AGR) back to the engine (2); and
- the moment (ZZP) when the engine (2) is ignited.

2. A method according to claim 1, **characterised in that** the functional relation between the actual storage time and the engine operating parameters is numerically determined by methods based on neuronal networks.

3. A method according to any of the preceding claims, **characterised in that** the reference storage duration is determined by using a family of operating characteristics determined in a preliminary test on the basis of at least one actually measured operating parameter.

4. A method according to any of the preceding claims, **characterised in that** the functional relation between the actual storage time and the operating parameters is fixed in the form of families of characteristics.

5. A method according to any of the preceding claims, **characterised in that** the functional relation between the actual storage duration and the operating parameters is fixed in the form of an analytical functional graph.

6. A device for diagnosing the storage properties of an NOₓ storage catalytic converter (1) which is disposed in the exhaust-gas path of an engine (2) and in which NOₓ from the exhaust gas of the engine (2) is stored during a storage phase and the NOₓ stored during the storage phase is catalysed during a regeneration phase, **characterised in that** the device comprises
- sensors for determining actual engine operating parameters;
- storage means in which an empirical relation determined in a preliminary test between the engine operating parameters and the actual storage time of the NOₓ storage catalytic converter (1) is stored together with an empirical relation between the engine operating parameters determined in a preliminary test and a reference storage duration of a non-aged NOₓ storage converter (1);
- engine operating parameter and a reference storage time of a non-aged NOₓ storage catalytic converter (1), and
- means for comparing the actual storage time with the reference storage time,
wherein the relation is stored between the actual storage duration and the following engine operating parameters:
- the air mass flow to the engine (2);
- the temperature in the exhaust-gas path in front of the NOₓ storage catalytic converter (1);
- the lambda factor (ratio of the air mass flow to the fuel mass flow on the way to the engine);
- the exhaust return rate (AGR) back to the engine (2), and
- the moment (ZZP) when the engine (2) is ignited.

7. A device according to claim 6, **characterised in that** the functional relation between the engine operating parameters and the actual storage time is stored in the form of a cross-reference list.

8. A device according to claim 6, **characterised in that** the functional relation between the engine operating parameters and the actual storage time is stored in the form of an analytically representable functional relation.

9. A motor vehicle in which a device according to any of claims 6 to 8 is installed.

## Revendications

1. Procédé pour diagnostiquer les propriétés de stockage d'un catalyseur de stockage de NOₓ (1) disposé dans le trajet des gaz d'échappement d'un moteur à combustion interne (2) et qui, pendant une phase de stockage, stocke du NOₓ provenant du gaz d'échappement du moteur à combustion interne (2) et, pendant une phase de régénération, une catalyse du NOₓ stocké pendant la phase de stockage est effectuée, de façon que, pendant la phase de stockage, une durée réelle de stockage est déterminée, au moins un état de fonctionnement du moteur existant pendant la durée réelle de stockage est enregistré, une durée de stockage de référence est déterminée en fonction de l'état de fonctionnement enregistré du moteur et la durée réelle de stockage est comparée avec la durée de stockage de référence,
selon lequel, au cours d'un essai préalable, la relation fonctionnelle entre les paramètres de fonctionnement du moteur et la durée réelle effective de stockage, déterminée au moyen de ceux-ci, d'un certain type de catalyseur de stockage de NOₓ (1) est calculée,
pendant la suite du fonctionnement du catalyseur de stockage de NOₓ (1), sa durée réelle de stockage actuelle est déterminée par mesure des paramètres de fonctionnement du moteur actuels en se basant sur la relation fonctionnelle préalablement déterminée empiriquement,
et l'on compare la durée réelle de stockage ainsi déterminée avec une durée de stockage de référence conforme à la norme des gaz d'échappement, calculée au cours d'essais préalables, d'un catalyseur de stockage de NOₓ (1) non vieilli, afin de pouvoir décider si le catalyseur de stockage de NOₓ (1) utilisé réellement dans le véhicule fonctionne encore conformément à la norme des gaz d'échappement à l'intérieur de limites tolérables ou s'il doit être remplacé par un nouveau,
**caractérisé en ce que**
comme base en tant que paramètres de fonctionnement du moteur déterminant la durée réelle de stockage, on prend les cinq paramètres suivants de fonctionnement du moteur :
- débit massique d'air vers le moteur à combustion interne (2) ;
- température dans le trajet des gaz d'échappement en amont du catalyseur de stockage de NOₓ (1) ;
- facteur lambda (rapport entre le débit massique d'air et le débit massique de carburant sur le trajet allant au moteur à combustion interne) ;
- taux de recyclage des gaz d'échappement (AGR) vers le moteur à combustion interne (2) ;
- point d'allumage (ZZP) du moteur à combustion interne (2).

2. Procédé selon la revendication 1,
**caractérisé en ce que**
la relation fonctionnelle entre la durée réelle de stockage et les paramètres de fonctionnement du moteur a été déterminée numériquement au moyen de méthodes reposant sur des réseaux neuronaux.

3. Procédé selon l'une quelconque des revendications précédentes,
**caractérisé en ce que**
la durée de stockage de référence est calculée par utilisation d'un réseau de caractéristiques de fonctionnement calculé au cours d'un essai préalable, sur la base d'au moins un des paramètres de fonctionnement mesurés actuellement.

4. Procédé selon l'une quelconque des revendications précédentes,
**caractérisé en ce que**
la relation fonctionnelle entre la durée réelle de stockage et les paramètres de fonctionnement du moteur est établie sous forme de réseaux de caractéristiques.

5. Procédé selon l'une quelconque des revendications précédentes,
**caractérisé en ce que**
la relation fonctionnelle entre la durée réelle de stockage et les paramètres de fonctionnement est établie sous forme d'une représentation fonctionnelle analytique.

6. Dispositif pour diagnostiquer les propriétés de stockage d'un catalyseur de stockage de NOₓ (1) disposé dans le trajet des gaz d'échappement d'un moteur à combustion interne (2) et qui, pendant une phase de stockage, stocke du NOₓ provenant du gaz d'échappement du moteur à combustion interne (2) et, pendant une phase de régénération, une catalyse du NOₓ stocké pendant la phase de stockage est effectuée,
**caractérisé en ce que**
le dispositif comprend :
des détecteurs pour déterminer les paramètres de fonctionnement du moteur actuels ;
des moyens de mémoire dans lesquels on enregistre une relation, empiriquement déterminée au cours d'un essai préalable, entre les paramètres de fonctionnement du moteur et la durée réelle de stockage du catalyseur de stockage de NOₓ (1), ainsi qu'une relation, empiriquement déterminée au cours d'un essai préalable, entre les paramètres de fonctionnement du moteur et une durée de stockage de référence d'un catalyseur de stockage de NOₓ (1) non vieilli ;
des moyens de comparaison pour comparer la durée réelle de stockage avec la durée de stockage de référence,
de façon à déduire la relation entre la durée réelle de stockage et les paramètres suivants de fonctionnement du moteur :
- débit massique d'air vers le moteur à combustion interne (2) ;
- température dans le trajet des gaz d'échappement en amont du catalyseur de stockage de NOₓ (1) ;
- facteur lambda (rapport entre le débit massique d'air et le débit massique de carburant sur le trajet allant au moteur à combustion interne) ;
- taux de recyclage des gaz d'échappement (AGR) vers le moteur à combustion interne (2) ;
- point d'allumage (ZZP) du moteur à combustion interne (2).

7. Dispositif selon la revendication 6,
**caractérisé en ce que**
la relation fonctionnelle entre les paramètres de fonctionnement du moteur et la durée réelle de stockage est enregistrée sous forme d'un tableau d'affectations.

8. Dispositif selon la revendication 6,
**caractérisé en ce que**
la relation fonctionnelle entre les paramètres de fonctionnement du moteur et la durée réelle de stockage est enregistrée sous forme d'une relation fonctionnelle représentée de façon analytique.

9. Véhicule automobile, comportant un dispositif selon l'une des revendications 6 à 8.
